# EUROPÄISCHE PATENTANMELDUNG

(11) **EP 0 673 752 A1**
(43) Veröffentlichungstag der Anmeldung: **27.09.1995**
(21) Anmeldenummer: 95101804.3
(22) Anmeldetag: 10.02.1995
(51) Int. Cl.: B29C 70/44, B29C 63/28, F16L 9/147

(54) **Rohr oder Hohlprofil mit besonderen Festigkeitseigenschaften bei geringem Gewicht und Verfahren zu seiner Herstellung**

(30) Priorität: 12.03.1994 DE 4408444
(71) Anmelder: DORNIER GmbH, D-88039 Friedrichshafen (DE)
(72) Erfinder: Gröschl, Peter, Dipl.-Ing., D-88048 Friedrichshafen (DE); Kaiser, Hartmut, Dr., D-88045 Friedrichshafen (DE); Pimiskern, Klaus, Dipl.-Ing., D-88718 Daisendorf (DE)
(74) Vertreter: Landsmann, Ralf, Dipl.-Ing.

(57) **Zusammenfassung**

Metallisches Rohr (2), wobei sich in der Bohrung eine nichtmetallische Faserverstärkung (4) befindet, die mit dem Rohr formschlüssig und kraftschlüssig verbunden ist.

## Beschreibung

Die Erfindung betrifft ein Rohr oder Hohlprofil mit besonderen Festigkeitseigenschaften bei geringem Gewicht.

Zum Stand der Technik gehörende Rohre aus Stahl oder Leichtmetall sind für zahlreiche Anwendungsfälle, bei denen neben hoher Festigkeit ein geringes Gewicht verlangt wird, zu schwer.

Beispiele hierfür sind
- Muskelkraft betriebene Fortbewegungsmittel und Sportgeräte wie Fahrräder oder Rollstühle
- Konstruktionsteile und Ausrüstungsteile von Land-/Luft- und Wasserfahrzeugen wie Rahmenkonstruktion von Solarmobilen und Leichtflugzeugen, Masten und Bäume von Segelbooten und Surfbrettern
- leichtgewichtiges transportables Mobilar und Transportmittel, wie Krankentragen.

Zur Reduzierung des Gewichts wurden Bauteile der beschriebenen Art aus faserverstärkten Kunststoffen hergestellt, wobei sich jedoch der Rohrmantel im Hinblick auf Schlagschutz, Berstschutz, Brandschutz und Bearbeitbarkeit seiner Oberfläche (Schweißen, Kleben, Lackieren, Eloxieren) als ungeeignet oder problematisch erwies.

Der Erfindung liegt die Aufgabe zugrunde, gerade oder gekrümmte Rohre zu fertigen, die bei geringem Gewicht eine hohe Festigkeit bei gleichzeitigem Schutz und Bearbeitbarkeit der Oberfläche aufweisen.

Diese Aufgabe wird durch den Gegenstand des Hauptanspruchs gelöst. Die Unteransprüche betreffen vorteilhafte Ausgestaltungen der Erfindung.

Gegenstand der Erfindung ist die Herstellung von Rohren oder Profilen, deren Eigenschaften durch eine Kombination der Werkstoffe Metall/Faserverbund auf den besonderen Anwendungsfall optimierbar sind, zum Beispiel als:
- Hochsteife Rohre für Tragwerke
- Innendruckbeaufschlagte Rohre
- Verbindungsstücke für Rohre
- Verstärkte Profile.

So können z.B. sehr leichte Rohre mit sehr dünnem, metallischem Außenmantel mittels geeigneter Verbindungsstücke zu einem gegenüber der rein metallischen Ausführung sehr viel leichteren Tragwerk zusammengefügt werden, ohne daß die Vorteile metallischer Außenflächen aufgegeben werden müssen.

Mit Hilfe der Erfindung ist es z.B. möglich, die Steifigkeitseigenschaften von rohrförmigen Profilen so zu verbessern, daß ein insgesamt wesentlich leichterer Träger erforderlich wird. Zum Beispiel bei Al-Masten für Segelboote befinden sich kritische Zonen in der Nähe des Mastfußes und im Bereich der Salingen. Durch Einbringen von CFK-Verstärkungen können diese Zonen so verstärkt werden, daß der Mast auf seine gesamte Länge aus einer wesentlich geringeren metallischen Wandstärke gefertigt werden kann.

Die Erfindung ermöglicht es, leichte Hochdruckrohre herzustellen mit z.B. thermoplastischem Innenrohr, metallischem Außenrohr und dazwischenliegender CFK-Verstärkung.

Mit Hilfe der Erfindung wird es ebenfalls möglich, gekrümmte mit CFK versteifte Rohre zu fertigen. Die so erzeugten Rohrkrümmer können bei sehr geringem Gewicht mit sehr hoher Steifigkeit ausgelegt sein, bei gleichzeitigem Beibehalten einer für viele Anwendungen notwendigen Metallaußenfläche.

Die Erfindung wird nachfolgend anhand von Figuren näher erläutert.

Es zeigen:
- Fig. 1: den Aufbau eines erfindungsgemäßen Rohrs in teilweiser Schnittdarstellung
- Fig. 2 und 3: den Zuschnitt eines Prepregs,
- Fig. 4: das Herstellen eines Prepregbands,
- Fig. 5 bis 7: verschiedene Schritte zur Herstellung des Erfindungsgegenstands.

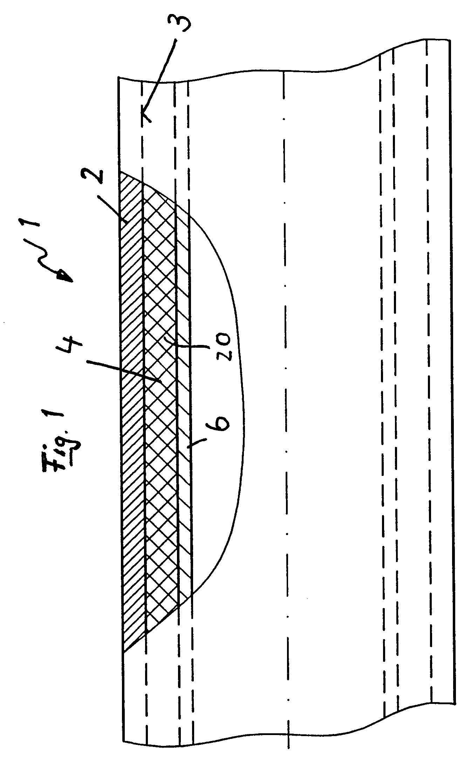

Der grundsätzliche, erfindungsgemäße Aufbau faserverstärkter rohrförmiger Produkte ist in Fig. 1 dargestellt. Ein solches Rohr **1** besteht aus einem meist relativ dünnwandigen, vornehmlich metallischen Außenmantel Metallrohr **2** (z.B. Al-Strangpreßprofil, Stahlhohlprofil; zylindrisch oder auch gekrümmt), einer in der Bohrung **3** befindlichen Faserverstärkung **4**, die Steifigkeit und Festigkeit erzeugt und einem Innenmantel **6** (z.B. Thermoplast oder Folie), der gegebenenfalls auch entfallen kann.

Die Faser-Verstärkung **4** ist in der Regel aus mehreren Schichten aufgebaut, deren Faserorientierung und Faserart auslegungsbedingt im wesentlichen die Eigenschaften des Produktes festlegt. Hohe Steifigkeit in Längsrichtung wird z.B. durch eine in Längsrichtung orientierte, unidirektionale CFK-Verstärkung unter Verwendung einer Hochmodul-C-Faser erreicht. Torsionsfestigkeit wird durch das Einbringen von möglichst vielen Umfangslagen erzeugt.

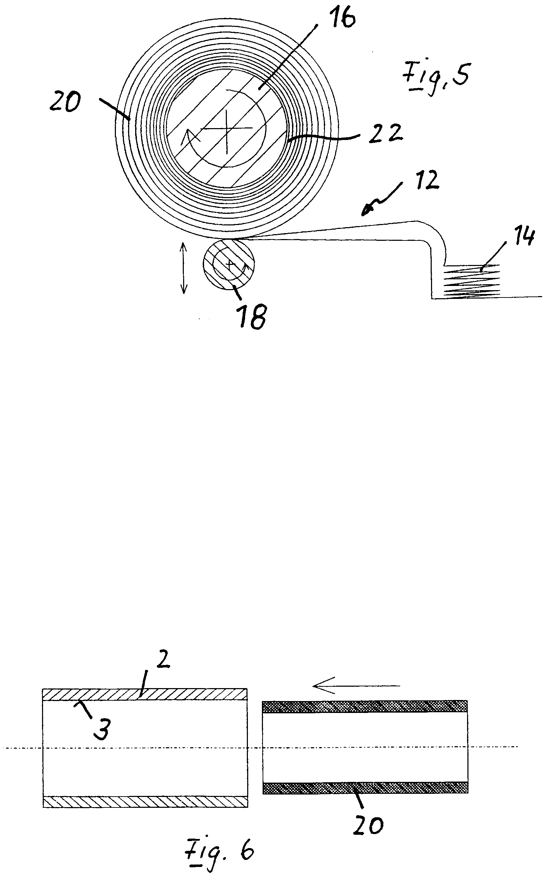

Nachfolgend werden die verschienen Schritte der Herstellung des erfindungsgemäßen Gegenstands näher erläutert:

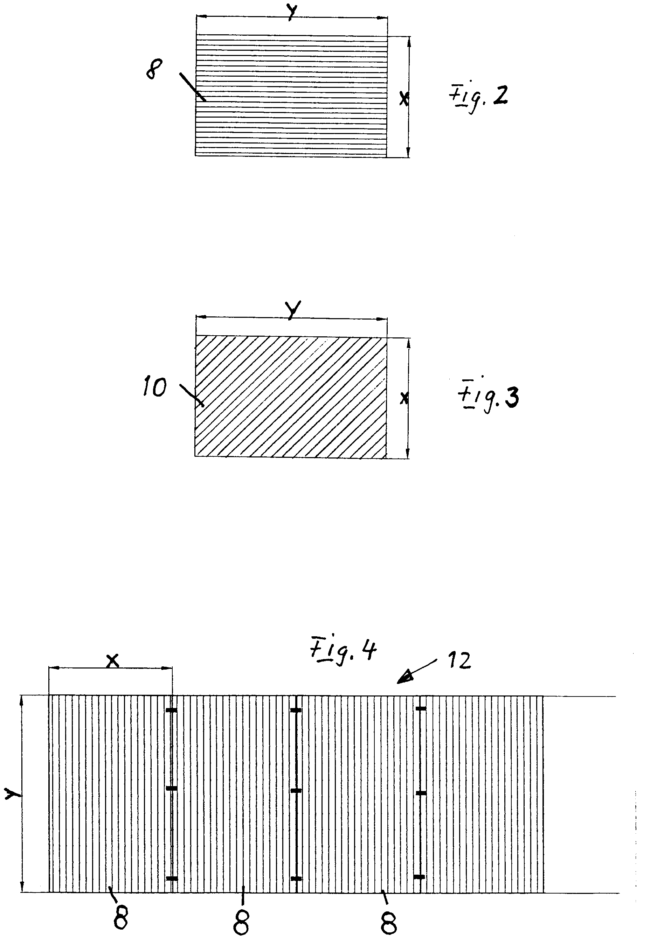

Fig. 2 "Herstellen von Prepreg-Zuschnitten":
X bezeichnet die Lieferbreite des Prepregs **8** für den unidirektionalen Aufbau; Y entspricht ungefähr der Rohrlänge. Sind andere Faserorientierungen entsprechend der Auslegung notwendig, so müssen entsprechend Fig. 3 die Prepregbahnen **10** im definierten Winkel geschnitten werden.

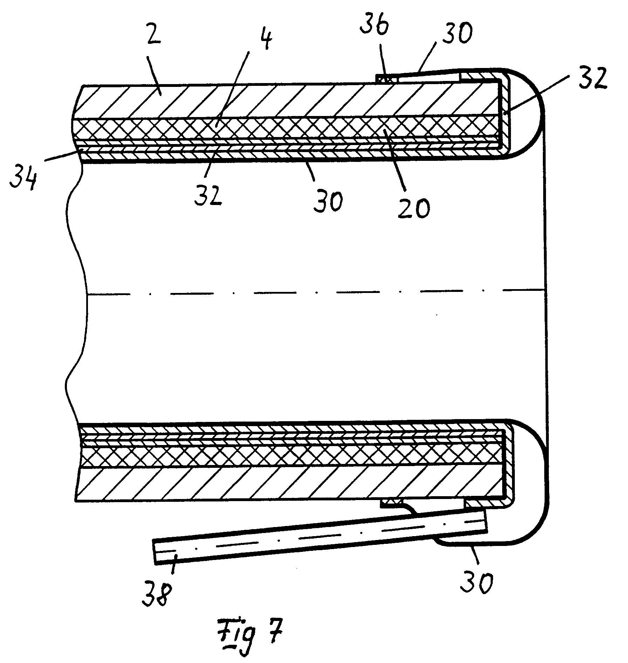

Fig. 4 "Herstellen einer Prepreg-Bahn":
Die einzelnen Prepregzuschnitte **8** werden zu einer langen Bahn **12** zusammengeklebt oder gelegt. Die nötige Länge der Bahn **12** aus Lagenbreiten wird über den Umfang des späteren Rohres und der Einzellagendicke berechnet.

Fig. 5 "Aufwickeln der Prepreg-Bahn zu einem Prepreg-Rohr:
Entsprechend Fig. 5 wird die Prepreg-Bahn **12** vom Stapel **14** weg auf einen Dorn **16** gewickelt. Dabei läuft eine kleine Walze**18** mit und drückt das Prepreg z.B. mittels Federdruck gegen den Dorn **16**. Die Andrückrolle **18** ist zur Achse des Dornes parallel geführt und paßt sich so dem dicker werdenden Prepreg-Rohr **20** an. Der Dorn ist mit einem dünnen Vlies und z.B. einer Trennfolie **22** belegt, um das Prepreg-Rohr **20** nach Fertigstellung vom Dorn **16** abziehen zu können.

Nach Abziehen des Prepreg-Rohres **20** vom Dorn **16** wird es in die Bohrung **3** des zu verstärkenden Rohres **2** eingeführt (Fig. 6). Das Prepreg-Rohr **20** hat als Faserverstärkung **4** zunächst in diesem Zustand einen etwas kleineren Außendurchmesser als das zu verstärkende Rohr **2**.

Durch ein auf das verwendete Harzsystem abgestimmtes Einbringen von Wärme und Überdruck (gegebenenfalls auch zu ersetzen durch einen expandierbaren Innenkörper) wird das Prepreg-Rohr **20** auf das Hohlprofil **2** (Rohr) expandiert und in diesem Zustand ausgehärtet. Die verwendete Härtetemperatur ist vom verwendeten Harzsystem abhängig. Es können sowohl kalthärtende als auch warmhärtende Harzsysteme Anwendung finden.

Der prinzipielle Aufbau einer Vakuumverpackung ist in Fig. 7 dargestellt. Er besteht aus einer Vakuumfolie **30** als innerem Mantel, z.B. als Schlauch vorkonfektioniert. Ein darunterliegendes Vlies **32** garantiert die Luftführung beim Evakuieren. Eine Trennfolie **34** bildet den Abschluß in Richtung Prepregrohr **20**. Vakuumfolie **30** als Schlauch und Vlies **32** werden um die Alu-Rohrenden **2** herum an den Außendurchmesser geführt und mit Hilfe von Klebeband **36** abgedichtet. An einem Ende des Rohres wird ein Vakuumanschluß **38** integriert und gegen die Vakuumfolie **30** abgedichtet. Es entsteht so ein evakuierbarer Raum zwischen Alu-Rohr **2** und Vakuumfolie **30**, der dazu benutzt werden kann, bei Anlegen eines Vakuums das Prepregrohr **20** an den Innendurchmesser des Alu-Rohres **2** anzulegen. Bei Aufbringen eines äußeren Druckes kann dieser Effekt verstärkt werden.

Ausgestaltungen der Herstellweise:
Zwischen den Herstellpositionen von Fig. 6 und 7 kann ein Biegevorgang eingeschoben werden; das heißt, das mit der innenliegenden, noch nicht ausgehärteten Verstärkung **20** versehene Hohlprofil **2** (Rohr) wird umgeformt; danach erfolgen die Herstellschritte Vakuumverpackung, Expansion und Aushärtung.

Statt der Verwendung von Prepreg, wie in den Herstellschritten bis zum Abziehen des Prepregs vom Dorn beschrieben, können auch ausgehärtete Stäbe oder Profile aus Faserverbundmaterial Verwendung finden, die dann z.B. durch Einkleben in das Hohlprofil den gewünschten Verstärkungseffekt erzielen.
Es können auch statt der Prepregs naß imprägnierte Rovingbänder oder harzgetränkte Matten verwendet werden.

Wie in Fig. 1 dargestellt, kann der Vakuumaufbau (Fig. 7) durch einen zusätzlichen Innenmantel aus z.B. Thermoplastischen Rohr ergänzt werden.

## Patentansprüche

1. Metallisches Rohr, **dadurch gekennzeichnet**, daß sich in der Bohrung (**3**) eine nichtmetallische Faserverstärkung (**4, 20**) befindet, die mit dem Rohr (**2**) formschlüssig und kraftschlüssig verbunden ist.

2. Metallisches Rohr nach Anspruch 1, **dadurch gekennzeichnet**, daß die Faserverstärkung (**4, 20**) aus mehreren Lagen mit unidirektionaler Faserorientierung besteht.

3. Metallisches Rohr nach Anspruch 2, **dadurch gekennzeichnet** daß die Faserverstärkung (**4, 20**) aus mehreren Faserlagen besteht, die jeweils eine unidirektionale Faserorientierung aufweisen und die Faserlagen relativ zueinander winklig verlaufen.

4. Metallisches Rohr nach Ansprüchen 1, 2 oder 3, **dadurch gekennzeichnet**, daß die Faserverstärkung in Längsrichtung des Rohres (**2**) eine unterschiedliche Wandstärke aufweist und sich ein Rohr mit unterschiedlichem Innendurchmesser ergibt.

5. Metallisches Rohr nach Ansprüchen 1 bis 3, **dadurch gekennzeichnet**, daß sich in der Bohrung der Faserverstärkung (**4, 20**) ein Innenmantel (**6**) aus metallischem oder thermoplastischem Werkstoff befindet.

6. Verfahren zur Herstellung von zylindrischen Hohlprofilen oder Rohren nach Ansprüchen 1 bis 5, **gekennzeichnet durch** folgende Verfahrensschritte:
- Zuschnitt einzelner Prepregs entsprechend der zu verstärkenden Rohrlänge,
- Verklebung der Prepregzuschnitte zu einer Bahn,
- Wickeln der Prepreg-Bahn auf einem Dorn zu einem Prepreg-Rohr,
- Abziehen des Prepreg-Rohrs vom Dorn,
- Einführen des Prepreg-Rohrs in die Bohrung des Metallrohrs,
- Expansion und Aushärtung des Prepreg-Rohrs in der Bohrung des Metallrohrs.

7. Verfahren nach Anspruch 6, **dadurch gekennzeichnet**, daß nach dem Einführen des Prepreg-Rohrs in das Metallrohr das Prepreg-Rohr mittels Vakuumverpackung expandiert wird.
